# EUROPÄISCHE PATENTANMELDUNG

(11) **EP 4 729 467 A1**
(43) Veröffentlichungstag der Anmeldung: **22.04.2026**
(21) Anmeldenummer: 24207447.4
(22) Anmeldetag: 18.10.2024
(51) Int. Cl.: B67D 1/00, A23L 2/54, B01F 23/232, B01F 23/236, B01F 25/313, B01F 25/43

(54) **GETRÄNKEZUBEREITER**

(71) Anmelder: Carbotek Systems GmbH, 86720 Nördlingen (DE)
(72) Erfinder: Koch, Florian, 86720 Nördlingen (DE)
(74) Vertreter: Pa-Munk

(57) **Zusammenfassung**

Die Erfindung betrifft eine Imprägnieranordnung (1) für einen zum Zubereiten eines Getränks aus einem imprägniergaslosen oder -armen Getränkevorprodukt und einer Anzahl Imprägniergase, wie z.B. N2 und/oder CO2 geeigneten Getränkezubereiter. Dabei mündet eingangsseitig eine Imprägniergaszufuhrleitung und eine Getränkevorproduktzufuhrleitung in die Imprägnieranordnung (1) ein, oder eine Getränkezuleitung, zu der sich die Imprägniergaszufuhrleitung und die Getränkevorproduktzufuhrleitung stromab der Imprägnieranordnung (1) vereint haben. Die Imprägnieranordnung (1) ist dazu eingerichtet, dass sich das in das Getränkevorprodukt eingemischte Imprägniergas in dem Getränkevorprodukt löst, so dass das Getränk gebildet wird. Ein ausgangsseitiger Getränkeauslass führt aus der Imprägnieranordnung (1), um das imprägnierte Getränk auszugeben.

Die Imprägnieranordnung (1) zeichnet sich dadurch aus, dass sie eine Anzahl in Strömungsrichtung in Reihe nacheinander angeordneter Mischerrohre (2, 3, 4) oder -schläuche aufweist, in denen jeweils eine Anzahl, bevorzugt Mehrzahl Statikmischer (30) angeordnet sind.

## Beschreibung

Die Erfindung betrifft einen Getränkezubereiter gemäß dem Oberbegriff des Anspruchs 10, sowie eine hierfür geeignete Imprägnieranordnung gemäß des Oberbegriffs des Anspruchs 1. Derartige Getränkezubereiter eignen sich, wie der Name sagt, zum Zubereiten eines Getränks, nämlich aus einem imprägniergaslosen oder -armen Getränkevorprodukt und einem Imprägniergas. Insbesondere werden heutzutage auch Spirituosen, oder alkoholhaltige Spirituosenmischgetränke wie zum Beispiel Espresso-Martini oder auch kalt gebrauter Kaffee mit Stickstoff imprägniert, um eine schöne Schaumkrone zu erzeugen, oder Wein mit Kohlensäure (genauer: CO₂), um ein sektartiges Getränk bereitzustellen.

Gattungsgemäße, schankseitige Getränkezubereiter weisen eine Imprägniergaszufuhrleitung und eine Getränkevorproduktzufuhrleitung auf, die sich stromab einer Imprägnieranordnung zu einer Getränkezuleitung vereinen, die zu der Imprägnieranordnung führt, in der sich das in das Getränkevorprodukt eingemischte Imprägniergas in dem Getränkevorprodukt lösen soll, so dass das Getränk zubereitet wird, wobei eine Getränkeauslassleitung aus der Imprägnieranordnung in der Regel zu einer Kühlung bzw. durch einen Durchlaufkühler und dann zu einem Zapfhahn führt, um das Getränk auszugeben. Die Imprägniergaszufuhrleitung und die Getränkevorproduktzufuhrleitung können auch direkt in die Imprägnieranordnung führen, so dass dort nicht nur das Lösen des Gases im Getränkevorprodukt erfolgt, sondern auch das Einmischen.

Ein hierbei grundsätzlich zu lösendes Problem ist die Eindosierung der korrekten Menge Imprägniergas pro Volumeneinheit Getränkevorprodukt. Einen Lösungsvorschlag hierzu liefert bereits das deutsche Patent DE 10 2015 010 783 B3.

Ein weiteres, grundsätzlich zu lösendes Problem ist das Einimprägnieren des eindosierten Imprägniergases in das Getränkevorprodukt, also das Lösen des Gases in dem Getränkevorprodukt, um so aus dem Getränkevorprodukt mit dem eindosierten Imprägniergas ein Getränk zuzubereiten, das aus dem Getränkevorprodukt und dem darin gelösten Imprägniergas besteht.

Hierfür werden im Getränkeausschank Imprägnieranordnungen verwendet, um in Schankanlagen Getränkevorprodukte mit Gasen zu imprägnieren, bzw. Gase in den Getränkevorprodukten zu lösen und so trinkfertige Getränke erst in der Schankanlage herzustellen, anstatt beispielsweise in der Brauerei oder beim Getränkeabfüller.

Als Beispiel für zu imprägnierende Flüssigkeiten kommen neben den eingangs erwähnten Spezialitäten auch Limonaden, Sirupe aller Art, Cola, Säfte, Cidre, Wein, Sodawasser und insbesondere ein kohlensäurearmes bzw. loses Biervorprodukt in Frage, also beispielsweise ein Biervorprodukt mit max. 1 Gramm CO₂ pro Liter Flüssigkeit. Neben aromahaltigen Gasen kommen als Imprägniergase insbesondere Kohlendioxyd - wird häufig als Kohlensäure bezeichnet - und Stickstoff (genauer gesagt: N₂ ), aber auch Luft (Druckluft), Argon oder Helium in Frage, um beispielsweise eine sprudelnde Limonade und insbesondere ein kohlensäurehaltiges Bier zu erzeugen. Bei der Imprägnierung einer Flüssigkeit mit CO₂ spricht man vom Karbonisieren, was in der Getränkezubereitung klassisch der häufigste Anwendungsfall eines einschlägigen Getränkezubereiters ist, wobei in letzter Zeit aber auch häufig ein schankseitiges Nitrogenisieren per gattungsgemäßen Getränkezubereitern erfolgt.

Ein Vorteil der Inline-Imprägnierung erst in der Schankanlage liegt dabei darin, dass das Getränkevorprodukt überdrucklos oder -arm in nicht oder nur begrenzt druckfähigen Behältern, wie z.B. Bag-In-Box-Systemen zur Schankanlage angeliefert werden kann, wodurch gegenüber herkömmlichen Verfahren, bei denen bereits fertige Getränke ausgeschenkt werden, Kosten für Druckbehälter (z.B. Fässer oder sog. Kegs) und deren Transport eingespart werden können. Andere Getränke lassen sich auf diese Weise überhaupt erst erzeugen.

In Schankanlagen einsetzbare Imprägnierer, weil in die Schankleitung eingebaut auch Inline-Imprägnierer genannt, die sich prinzipiell auch für gattungsgemäße Getränkezubereiter eignen, sind beispielsweise der DE 198 51 360 A1 und der US 3,761,066 in Ausführung als Rohrsieb-Karbonatoren zu entnehmen, in Ausführung als Schüttgut-Karbonatoren der DE 101 06 397 A1 und in Ausführung mit einem porenaufweisenden Festkörper der europäischen Patentschrift EP 1 998 878, mit Imprägnierkörpern aus hydrophoben Hohlfasern beispielsweise den US-Patentschriften US 6,712,342 B2 und US 6, 138,995, sowie in Ausführung mit einer Vormischzelle der deutschen Patentanmeldung DE 10 2008 012 486 A1.

In letzter Zeit kommen jedoch zunehmend schankimprägnierte bzw. inlineimprägnierte Getränke in Mode, die auf Furchtpulpebasis oder aus klebrigen Sirupen erzeugt werden, wie beispielsweise bestimmte, nitrogenisierte Cocktails. Bei derartigen Getränken neigen vorbekannte Imprägnierer zum Verstopfen, so dass der Getränkezubereiter häufig zerlegt und der Imprägnierer ausgetauscht werden muss. Darüber hinaus sind bekannte Getränkeimprägnierer der vorstehend genanten Art auch relativ teuer, so dass abgesehen von dem beim Verstopfen nötigen Austausch auch generell ein Bedürfnis besteht, günstigere Getränkeimprägnierer zu finden.

Hiervon ausgehend ist es Aufgabe der vorliegenden Erfindung, einen Getränkezubereiter und eine hierfür geeignete Imprägnieranordnung bereit zu stellen, die kostengünstig hergestellt und betrieben werden können und geringe Wartungsintervalle aufweisen.

Diese Aufgabe wird hinsichtlich der Imprägnieranordnung mit den Merkmalen des Anspruchs 1 gelöst, hinsichtlich des Getränkezubereiters mit den Merkmalen des Anspruchs 10.

Erfindungsgemäß ist eine Imprägnieranordnung vorgesehen, die eine Anzahl in Reihe durchströmter Mischerrohre oder -schläuche aufweist, in denen jeweils eine Anzahl, bevorzugt eine Mehrzahl Statik-Mischer angeordnet sind. Der erfindungsgemäße Getränkezubereiter ist mit einer solchen Imprägnieranordnung ausgestattet.

Es hat sich gezeigt, dass bei genügender Länge der Mischerrohre oder -schläuche und damit genügend großer Länge durchströmter Statik-Mischer trotz der gegenüber bekannten Imprägnierern relativ kleinen Oberfläche eine für die Getränkeimprägnierung in vielen Fällen hinreichende Lösung des Imprägniergases in dem Getränkevorprodukt erzielt werden kann, ohne dass es zu Verstopfungen kommt, weil Statik-Mischer schon aufgrund der gegenüber herkömmlichen Getränkeimprägnierern relativ großen Flüssigkeitsdurchlässen allgemein weniger zu Verstopfungen neigen als bekannte Inline-Imprägnierer.

Als besonders geeignet haben sich dabei als Statik-Gittermischer mit sich kreuzenden Stegen ausgebildete Statik-Mischer erwiesen, die insbesondere bei einer Ausbildung aus Kunststoff weder zu Verstopfungen neigen, noch teuer sind. In Tests haben sich derartige Statik-Gittermischer mit einem Durchmesser und Länge von 9 - 10 mm, insbesondere bei 18 Stegen in 6 Lagen, Stegdicke 1 mm, Werkstoff Polyamid, sowie entsprechende Innendurchmesser der Anzahl Mischerrohre oder -schläuche als vorteilhaft erwiesen.

Damit lassen sich auch die Mischerrohre bzw. -schläuche im für Getränkezubereitung üblichen Druckbereich äußerst kostengünstig als Kunststoffelemente, insbesondere Kunststoffrohre herstellen, sodass sich insgesamt eine wenig zu Verstopfungen neigende, leicht zu reinigende und kostengünstige Imprägnieranordnung ergibt.

Falls der Bauraum in einem Getränkezubereiter, häufig in etwa in Größe eines PC-Gehäuses, für die zum ausreichenden Imprägnieren bzw. zur Anordnung ausreichend vieler oder langer Statikmischer nicht ausreicht, kann dabei eine Mehrzahl nebeneinander angeordneter, mit 180°-Bogenleitungen zickzackartig in Reihe verbundene Mischerrohre oder -schläuche äußerst platzsparend angeordnet werden, um auch in kleinen Bauräumen die für die Imprägnierung nötige Länge der mit Statikmischern versehenen Mischerrohre oder -schläuche bereit zu stellen.

Besonders vorteilhaft im Sinne eines guten Imprägnierergebnisses bei gleichzeitig durch die Verwendung von Statik-Mischern erzielten Kostenvorteilen ist es dabei, wenn die Imprägnieranordnung eine Zirkulationsleitung aufweist, die von stromab der Anzahl der Mischerrohre oder -schläuche um die Anzahl Mischerrohre oder -schläuche herum zurückführt und stromauf der Anzahl Mischerrohre oder -schläuche in die Getränkevorproduktzufuhrleitung oder die Getränkezuleitung mündet. Ebenfalls denkbar wäre es, die Zirkulationsleitung eingangsseitig direkt wieder in die Imprägnieranordnung zu führen. Auf diese Weise kann um das zurückzirkulierte Gas-Flüssigkeits-Gemisch erneut durch die Anzahl Mischerrohre oder -schläuche mit den Statik-Mischern geschickt werden, um weitere Gaspartikel in der Flüssigkeit zu lösen.

Vorteilhaft ist dabei eine Zirkulationspumpe vorgesehen, mit der das Gas-Flüssigkeits-Gemisch durch die Zirkulationsleitung zurück zur Eingangsseite der Imprägnieranordnung gefördert werden kann. Die Zirkulationspumpe kann dabei beispielsweise im Ansprechen auf das Öffnen eines zur Ausgabe des Getränks vorgesehenen Zapfhahns gesteuert werden, etwa so, dass die Zirkulation anläuft, sobald der Zapfhahn geöffnet wird und, gegebenenfalls nach einer gewissen Nachlaufzeit, beendet wird, sobald der Zapfhahn geschlossen wird. Die Zikulationspumpe kann jedoch auch im Ansprechen auf die Signale eines Durchflussmessers in der Getränkevorprodukzufuhrleitung oder der Getränkezuleitung gesteuert werden. Vorteilhaft wird die Zirkulationspumpe dabei eingeschaltet, sobald ein Durchfluss festgestellt wird und ausgeschaltet, nachdem eine Nachlaufzeit nach dem Ende des festgestellten Durchflusses abgelaufen ist, beispielsweise eine Nachlaufzeit von 20 Sekunden.

Durch den internen Zirkulationskreislauf wird insbesondere bei warmen Temperaturen und bei hohen CO₂-Bedarfswerten, wie beispielsweise bei der Karbonisierung von Wein, ein sehr hohes Maß an Imprägniergasbindung im Getränk erzielt.

Besonders gute Imprägnierergebnisse erzielt man, wenn stromab der Anzahl Mischerrohre oder -schläuche ein Mischtank mit einem Tankeinlass, einem Tankauslass und einem Zirkulationsanschluss vorgesehen ist, wobei ein Tankinnenraum des Mischtanks über den Tankeinlass an die Anzahl Mischerrohre oder -schläuche angeschlossen ist, über den Tankauslass an die Getränkeauslassleitung und über den Zirkulationsanschluss an die Zirkulationsleitung. Denn in diesem, dem zum Aufimprägnieren des Gases in das Getränkevorprodukt dienenden Statik-Mischern strömungsmäßig nachgeordneten Mischtank kann die Rückführung des zu zirkulierenden Anteils an den Gas-Getränkevorprodukt-Gemisch in die Zirkulationsleitung abgeleitet werden, ohne das Aufimprägnieren ungünstig zu beeinflussen.

Besonders vorteilhaft ist dabei, wenn sich der Ausgang zur Zirkulationsleitung relativ weit oben im Mischtank zum Tankinneren hin öffnet, der Auslass zur Getränkeauslassleitung/ zum Zapfhahn hin dagegen weit unten. Denn im Mischtank wird sich, wie Versuche gezeigt haben, ungebundenes Imprägniergas im oberen Bereich des Tankinneren ansammeln und dann verstärkt der Zirkulation zugeführt werden, anstatt dem Zapfhahn.

Günstig ist es dabei, wenn der Mischtank eine längliche Form aufweist und mit sich in Vertikalrichtung oder zumindest mit überwiegender Vertikalkomponente erstreckender Längsachse angeordnet ist, so dass sich im oberen Bereich des Tankinneren eine relativ hohe Gasblase an ungebundenem Imprägniergas ausbildet, welche dann in die Zirkulationsleitung zurückgeführt werden kann.

Der Mischbehälter braucht dabei kein großes Volumen zu haben, was im Sinne geringer Bauraumanforderungen ist. Ein Volumen von < 500 ml, vorteilhaft 150 ml bis 300 ml, reicht aus.

Weiterhin vorteilhaft für gute Imprägnierergebnisse ist es, wenn die tankeinlassseitige Einmündung in das Tankinnere sich in einem höhenmäßig zwischen der Öffnung zum Tankauslass hin und der Öffnung zum Zirkulationsanschluss hin gelegenen Höhenbereich befindet, bevorzugt in etwa auf halber Höhe dazwischen. Denn dann ist sichergestellt, dass das einströmende Gas-Getränkevorprodukt-Gemisch weder sofort in den Getränkeauslass gesogen wird, noch sofort zurück in die Zirkulationsleitung. Mit anderen Worten, dass das ungebundene Imprägniergas im Mischtank Gelegenheit hat, sich an der Oberseite des Tankinneren anzusammeln.

Für den Fall, dass sich trotz Zirkulation beim erfindungsgemäßen Einsatz von Statik-Mischern zum Aufimprägnieren des Imprägniergases auf das Getränkevorprodukt ein ungebundener Gasüberschuss bildet, etwa weil mit mehr Imprägniergas gearbeitet wird, als in das Getränkevorprodukt eingebunden werden kann, ist es zudem vorteilhaft, wenn die Imprägnieranordnung stromab der Anzahl der Mischerrohre oder -schläuche und bevorzugt der Mischtank einen zusätzlichen Entlüftungsauslass aufweist, Im Sinne einer durch den Entlüftungsauslass möglichst reinen Gasabfuhr öffnet sich der Entlüftungsauslass vorteilhaft möglichst weit oben am Mischtank zum Tankinneren hin, bevorzugt auch oberhalb der Öffnung des Zirkulationsanschlusses zum Tankinneren hin, so dass sichergestellt ist, dass durch den Entlüftungsauslass das sich an der Oberseite des Mischtanks ansammelnde Restimprägniergas abgeführt wird. Die die Tankwand durchdringende Entlüftungsleitung kann dabei mit einem Entlüftungsventil versehen sein, vorteilhaft mit einem elektronisch steuerbaren Magnetventil, so dass die Entlüftungsfunktion über die Steuerung des Getränkezubereiters gesteuert werden kann.

Der länglich ausgeformte, stehende Mischtank kann dabei besonders einfach als stehender Hohlkolben ausgebildet sein, der mit einem Tankdeckel versehen, vorzugsweise verschraubt ist, wobei die Verschraubung weiterhin bevorzugt mit einem Dichtring gegen die Umgebung abgedichtet ist. Durch den Tankdeckel kann dann eine Eingangsanschlussleitung, eine Zirkulationsanschlussleitung und bevorzugt auch eine Entlüftungsanschlussleitung in den Mischtank geführt sein, wohingegen der Tankauslass eine die Tankwand des Mischtanks bevorzugt an der Unterseite des Tanks durchdringende Tankauslassleitung aufweist, deren tankinnenraumseitige Öffnung sich direkt an oder zumindest in der Nähe der Unterseite des Mischtanks zum Tankinnenraum hin öffnet.

Die Tankeinlassleitung des Tankeinlasses öffnet sich dagegen vorteilhaft auf etwa halber Höhe des Tankinnenraums zum Tankinneren hin und kann, falls sie durch den Tankdeckel geführt ist, vom Tankdeckel entsprechend weit nach unten vorstehen. Es wäre aber auch eine seitliche Einleitung in den Mischtank auf halber Höhe des Mischtanks denkbar. Dabei hat es sich gezeigt, dass für eine gute Einschichtung im Mischtank bei Abfuhr des ungebundenen Imprägniergases nach oben hin eine horizontale Öffnung zum Tankinnenraum hin vorteilhaft ist. Die Zirkulationsanschlussleitung des Zirkulationsanschlusses kann dabei ebenfalls durch den Tankdeckel geführt sein und ein Stück weit nach unten hin abstehen, so dass sie sich unterhalb der optionalen Entlüftungsleitung, aber oberhalb der Öffnung des Tankeinlasses zum Tankinnenraum hin öffnet. Vorteilhaft kann im nach unten hin vorstehenden Rohrstutzen der Zirkulationsanschlussleitung eine Perforierung der Rohrwand vorgesehen sein, sodass hier im Bereich der sich bildenden Gasblase verstärkt ungebundenes Imprägniergas zurück in die Zirkulationsleitung abgeführt werden kann.

Um das Getränkevorprodukt in die Imprägnieranordnung und das fertig imprägnierte Getränk aus der Imprägnieranordung wieder heraus bis zur Entnahmestelle, also üblicherweise zum Zapfhahn, zu fördern, kann der Getränkezubereiter eine Getränkepumpe aufweisen. Dabei sind im Getränkebereich zwar per Druckgas angetriebene Getränkepumpen, beispielsweise Membranpumpen üblich. Es hat sich jedoch im Sinne einer besseren Steuerbarkeit über eine elektronische Steuereinheit des Getränkezubereiters als vorteilhaft erwiesen, wenn als Getränkepumpe eine elektromotorisch angetriebene Getränkepumpe verwendet wird. Insbesondere eine sogenannte BLDC-Getränkepumpe, also eine von einem bürstenlosen Gleichstrommotor (Englisch: *brushless DC*) angetriebene Getränkepumpe. Damit könnte der Getränkezubereiter auch mit Akkumulatoren und damit unabhängig vom Stromnetz betrieben werden.

Zur Steuerung der Getränkepumpe kann dabei ein Druckmesser in der Getränkevorproduktzufuhrleitung, der Getränkeleitung oder in der Getränkeauslassleitung vorgesehen sein, um die Getränkepumpe auf einen gewünschten Systemdruck im Getränkezubereiter steuern zu können. Weiterhin vorteilhaft kann ein Durchflussmesser vorgesehen sein, um die Getränkepumpe auf den gewünschten Volumenstrom steuern zu können. Die Steuerung kann in einer beispielsweise als Microcontroller realisierten Steuereinheit realisiert werden. Auch ein Display zur Visualisierung von Systemzuständen, Fehlermeldungen und Sensorwerten kann vorgesehen sein.

Schließlich kann der Getränkezubereiter für eine möglichst gut zur Volumenstrom des Getränkevorprodukts passende Eindosierung von Imprägniergas einen Gasdosierer aufweisen, wie er grundsätzlich aus dem eigenen deutschen Patent DE 10 2015 010 783 B3 bekannt ist, welches diesbezüglich hier voll umfänglich miteinbezogen wird. Die Steuerung des Gasdosierers kann dabei auf derselben Steuereinheit wie die Steuerung des restlichen Systems erfolgen.

Weitere vorteilhafte Weiterbildungen der Erfindung werden anhand der in den beiliegenden Zeichnungen dargestellten Ausführungsform näher erläutert. Es zeigen:
- Figur 1:: eine Ausführungsform des erfindungsgemäßen Getränkezubereiters als Blockschaubild; und
- Figur 2:: eine Detailansicht eines Mischertanks des in Figur 1 gezeigten Getränkezubereiters;
- Figur 3:: einen Statikmischer zur Anordnung in einem Mischerrohr oder -schlauch des in der Figur 1 gezeigten Getränkezubereiters in perspektivischer Ansicht; und
- Figur 4: den in Figur 3 gezeigten Statikmischer in Seitenansicht.

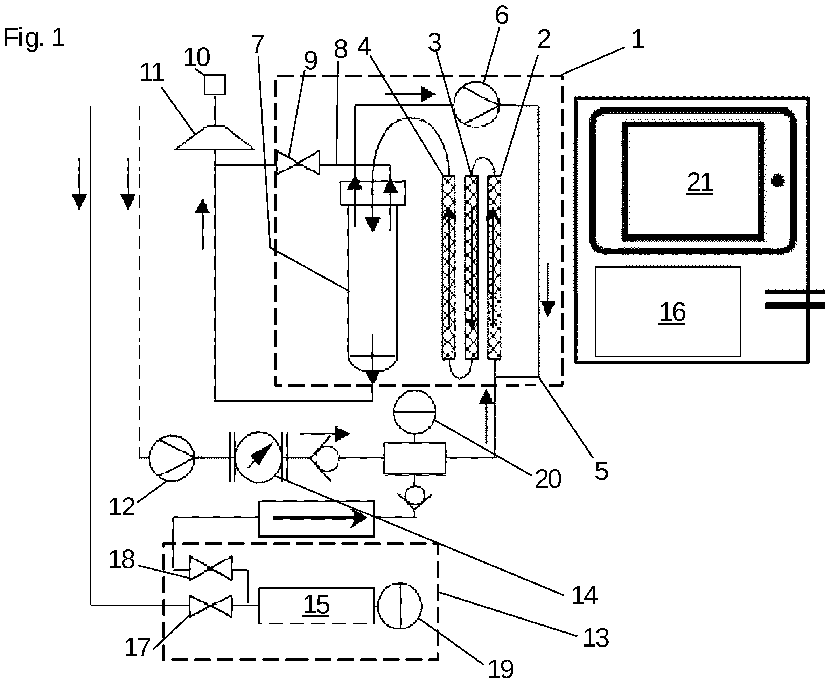

Die Figur 1 zeigt schematisch einen Getränkezubereiter mit einer insgesamt mit 1 bezeichneten Imprägnieranordnung. Die Imprägnieranordnung hat drei nebeneinander angeordnete Mischerrohre oder -schläuche 2, 3, 4, die eingangsseitig an eine Getränkezuleitung und untereinander über Bögen in Reihe nacheinander miteinander verbunden sind. Am strömungsmäßig letzten Mischerrohr oder -schlauch 4 schließt ausgangseitig eine Tankeinlassleitung an, welche in einen Mischertank 7 der Imprägnieranordnung 1 führt.

In den Mischerrohren oder -schläuchen 2, 3, 4, bevorzugt Kunststoffrohre, sind dabei wie mit Strichgitterlinien angedeutet Statik-Mischer, insbesondere Statik-Gittermischer angeordnet, im bevorzugten Ausführungsbeispiel Statik-Gittermischer mit Durchmesser 9,4 mm und Länge 9,4 mm, jeweils mit 18 Stegen in 6 Lagen bei einer Stegdicke von 1 mm.

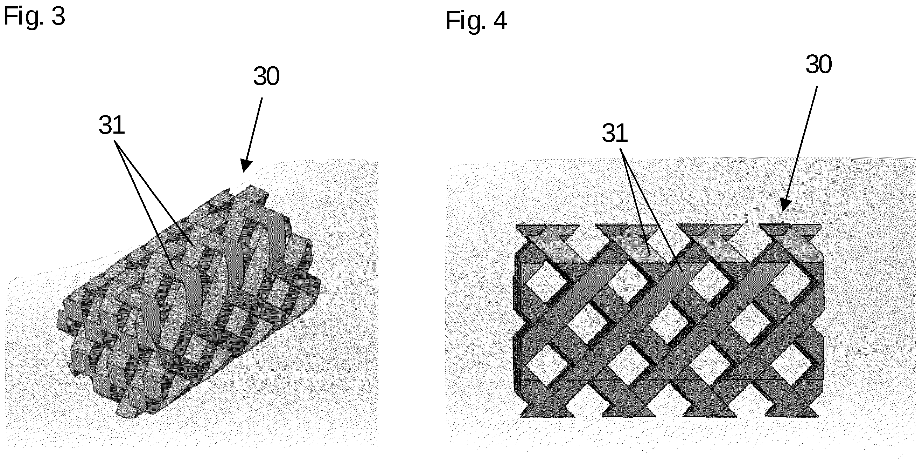

Ein derartiger Statikmischer 30 ist in den Figuren 3 und 4 im Einzelnen gezeigt. Er weist sich kreuzende Stege 31 auf, die den als Durchlass für die zu impprägnierende Flüssigkeit zur Verfügung stehenden Raum verengen und die Flußbahn mäandern lassen, so dass es zu einer Durchmischung und Imprägnierung kommt.

Die Mischerrohre oder -schläuche 2, 3, 4 weisen einen entsprechenden Innendurchmesser auf und eine bevorzugte Länge von ca. 150 bis 250 mm, so dass jeweils eine Vielzahl von Statik-Mischern in jedem der drei gezeigten Mischerrohre oder -schläuche 2, 3, 4 angeordnet sein kann. Selbstverständlich können auch mehrere oder weniger Mischerrohre oder -schläuche mit größerer oder kleinerer Länge vorgesehen sein. Ebenso kann der Durchmesser der Rohre oder Schläuche variieren, solange dann auch die Statik-Mischer einen entsprechenden Durchmesser aufweisen. Es kann auch lediglich ein entsprechendes Mischerrohr vorgesehen sein. Platzsparend hat sich aber die gezeigte Ausführungsform erwiesen, was bei Getränkezubereitern der erfindungsgemäßen Art, die häufig in kleinen Gehäusen in der Größe von Schuhschachteln oder PC-Gehäusen untergebracht sind, ein entscheidendes Kriterium ist.

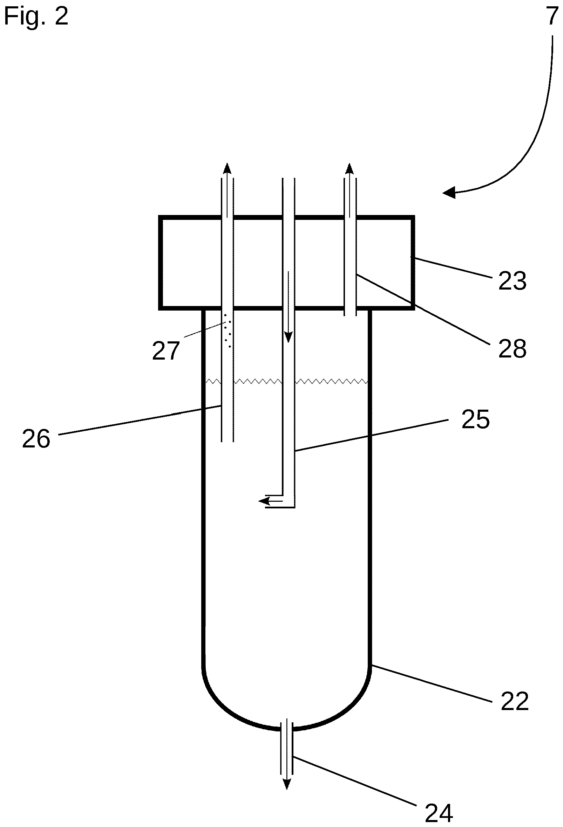

Der Mischtank 7 ist im Einzelnen in der Figur 2 gezeigt. Der eingangsseitig mit dem Ausgang des stromab gelegenen Mischerrohrs 4 verbundene Tankeinlass weist dabei eine Tankeinlassleitung 25 auf, die durch einen Tankdeckel 23 hindurch in etwa auf halbe Höhe des Tankinnenraums bzw. Innenvolumens geführt ist und dort um 90° abgeknickt, so dass die Einmündung in den Tankinnenraum horizontal ist.

Der Mischtank 7 wird dabei von einem stehend angeordneten Rohrkolben 22 gebildet, auf den der Tankdeckel 23 aufgeschraubt ist. Am Rohrkolben 22 unten befindet sich ein Tankauslass mit einer dort durch die Tankwand führenden Tankauslassleitung 24, mit der der Mischtank an eine zur Getränkeentnahmestelle, also in der Regel zum Zapfhahn führende Leitung angeschlossen ist. Oberseitig durch den Tankdeckel 23 führt ferner eine Zirkulationsanschlussleitung 26 in das Tankinnere bis auf eine Höhe oberhalb der Einmündung der Tankeinlassleitung 25. Im Bereich nahe des Tankdeckels 23 ist die Zirkulationsanschlussleitung 26 mit Gasaufnahmelöchern 27 perforiert. Weiterhin führt optional auch eine Entlüftungsanschlussleitung 28 durch den Tankdeckel 23 in den Tankinnenraum.

Die Zirkulationsanschlussleitung 26 endet oberhalb der tankinnenseitigen Öffnung der Tankeinlassleitung 25 auf ca. 2/3-Höhe des Tankinnenraums. Die Entlüftungsanschlussleitung 28 endet innenseitig am Tankdeckel 23 und damit noch oberhalb der Zirkulationsanschlussleitung 26.

Die Zirkulationsanschlussleitung 26 ist an eine Zirkulationsleitung 5 angeschlossen, über die ein Teil des Gas-Flüssigkeitsgemischs zurück auf die Eingangsseite der Mischerrohre 2, 3, 4 zirkuliert werden kann. Hierfür ist eine Zirkulationspumpe 6 vorgesehen, die im Ansprechen auf Signale eines Durchflussmessers 14 weiter stromauf in einer Zufuhrleitung für das zu imprägnierende Getränkevorprodukt gesteuert wird.

Die Tankauslassleitung 24 ist über einen optionalen Druckreduzierer 11 an eine zu einem Zapfhahn 10 führende Zapfleitung angeschlossen. Die Entlüftungsanschlussleitung 28 ist an eine Entlüftungsleitung 8 angeschlossen, die mit einem Entlüftungsventil 9 versehen ist und stromab des Druckreduzierers 11 in die Zapfleitung mündet. Das Entlüftungsventil 9 kann ebenfalls im Ansprechen auf Signale des Durchflussmessers 14 gesteuert werden, etwa so, dass nach Abschluss eines Zapfvorgangs eine Entlüftungsphase anschließt.

Stromauf des Durchflussmessers ist eine vorteilhaft als BLDC-Getränkepumpe ausgebildete Getränkepumpe 12 vorgesehen um das zu imprägnierende Getränkevorprodukt aus einer Getränkevorproduktquelle, z.B. einem Drucklosen Getränkesack durch die Getränkevorproduktzuleitung und dann weiter durch das Gesamtsystem des Getränkezubereiters bis zum Zapfhahn zu fördern. Auch die Getränkepumpe 12 kann im Ansprechen auf Signale des Durchflussmessers 14 und/oder eines Druckmessers 20 stromab des Durchflussmessers 14 und/oder Signale des Zapfhahns gesteuert werden.

Zur Eindosierung des Imprägniergases in das zugeführte Getränkevorprodukt ist ferner ein Gasdosierer 13 vorgesehen, mit dem die Zufuhr des aus einer Druckgasquelle (z.B. Gasflasche) kommenden Imprägniergases passend zum per Durchflussmesser 14 erfassten Volumenstrom des Getränkevorprodukts eindosiert wird. Der Gasdosierer 13 umfasst einen Imprägniergaspufferspeicher 15 mit einem angeschlossenen Druck- und optional Temperaturmesser19, der mit einem Eingangsventil 17 und einem Ausgangsventil 18 getaktet auf den Flüssigkeitsdurchfluss geladen und zur Imprägnieranordnung 1 hin entladen werden kann. Über die allgemeine Gasgleichung lässt sich per Druckmesser 19 und der Taktzahl der Ventile 17, 18 die Imprägniergasmenge, die dem Geetränkevorprodukt pro Volumeneinheit zugesetzt wird, erfassen und steuern.

Stromab des Gasdosierers ist optional ein weiterer Imprägniergaspufferspeicher vorgesehen, um Gasstöße zu glätten. Die Imprägniergaszuleitung vereinigt sich dann weiter stromab mit der Getränkevorproduktzuleitung zu einer in die Imprägnieranordnung 1 einmündenden Getränkeleitung, wobei Rückschlagventile stromauf der Einmündung ein unerwünschtes Einströmen von Imprägniergas in die Getränkevorproduktzuleitung und von Flüssigkeit in die Imprägniergaszuleitung verhindern. Stromab davon mündet die Zirkulationsleitung 5 in die Getränkeleitung, so dass rückgeführtes Flüssigkeits-Gas-Gemisch erneut durch die Imrpägnieranordnung 1 geschickt wird.

Zur Steuerung der Getränkepumpe 12, des Gasdosierers 13, der Zirkulationspumpe 6 und des Entlüftungsventils 9 ist dabei eine vorteilhaft als Mikrocontroller ausgebildete Steuereinheit 16 vorgesehen, an die ferner ein Display 21 zur Anzeige von Systemzuständen, Fehlermeldungen etc. angeschlossen sein kann.

Vorteilhafte Weiterbildungen und Modifikationen der gezeigten Ausführungsform sind möglcih, ohne den Rahmen der Erfindung zu verlassen.

## Patentansprüche

1. Imprägnieranordnung (1) für einen zum Zubereiten eines Getränks aus einem imprägniergaslosen oder -armen Getränkevorprodukt und einer Anzahl Imprägniergase, wie z.B. N₂ und/oder CO2 geeigneten Getränkezubereiter, wobei
an der Imprägnieranordnung (1) eingangsseitig ein Einmünden einer Imprägniergaszufuhrleitung und einer Getränkevorproduktzufuhrleitung vorgesehen ist, oder einer Getränkezuleitung, zu der sich die Imprägniergaszufuhrleitung und die Getränkevorproduktzufuhrleitung stromab der Imprägnieranordnung (1) vereint haben, und wobei
die Imprägnieranordnung (1) dazu eingerichtet ist, dass sich das in das Getränkevorprodukt eingemischte Imprägniergas in dem Getränkevorprodukt löst, so dass das Getränk gebildet wird, und wobei
ein ausgangsseitiger Getränkeauslass aus der Imprägnieranordnung (1) führt, um das imprägnierte Getränk auszugeben,
**dadurch gekennzeichnet, dass**
die Imprägnieranordnung (1) eine Anzahl in Strömungsrichtung in Reihe nacheinander angeordneter Mischerrohre (2, 3, 4) oder -schläuche aufweist, in denen jeweils eine Anzahl, bevorzugt Mehrzahl Statikmischer (30) angeordnet sind, insbesondere Statik-Gittermischer mit sich kreuzenden Stegen (31) bevorzugt aus Kunststoff, wobei
die Anzahl in Strömungsrichtung in Reihe nacheinander angeordneter Mischerrohre (2, 3, 4) oder -schläuche vorteilhaft eine Mehrzahl nebeneinander angeordneter, mit 180°-Bogenleitungen zickzackartig in Reihe verbundener Mischerrohre (2, 3, 4) oder -schläuche umfasst, oder einen mehrfach um 180° gebogenen Mischerschlauch, und bevorzugt als eine Anzahl Kunststoffrohre ausgebildet ist.

2. Imprägnieranordnung (1) nach Anspruch 1, **dadurch gekennzeichnet, dass** die Imprägnieranordnung (1) eine Zirkulationsleitung (5) aufweist, die von stromab der Anzahl Mischerrohre (2, 3, 4) oder -schläuche um die Anzahl Mischerrohre (2, 3, 4) oder -schläuche herum zurückführt und stromauf der Anzahl Mischerrohre (2, 3, 4) oder -schläuche in die Getränkevorproduktzufuhrleitung, die Getränkezuleitung oder direkt in die Imprägnieranordnung (1) mündet, wobei vorteilhaft eine an der Zirkulationsleitung (5) angreifende Zirkulationspumpe (6) vorgesehen ist.

3. Imprägnieranordnung (1) nach Anspruch 2, **dadurch gekennzeichnet, dass** die Imprägnieranordnung (1) stromab der Anzahl Mischerrohre (2, 3, 4) oder -schläuche einen Mischtank (7) mit einem Tankeinlass, einem Tankauslass und einem Zirkulationsanschluss aufweist, wobei ein Tankinnenraum des Mischtanks (7) über den Tankeinlass an die Anzahl Mischerrohre (2, 3, 4) oder -schläuche angeschlossen ist, über den Tankauslass an die Getränkeauslassleitung und über den Zirkulationsanschluss an die Zirkulationsleitung (5), und wobei der Mischtank (7) bevorzugt ein längliche Form aufweist und mit sich in Vertikalrichtung oder mit überwiegender Vertikalkomponente erstreckender Längsachse angeordnet ist.

4. Imprägnieranordnung (1) nach Anspruch 3, **dadurch gekennzeichnet, dass** der Tankauslass eine eine Tankwand des Mischtanks (7) durchdringende Tankauslassleitung (24) mit einer Außenöffnung und einer tankinnneraumseitigen Öffnung aufweist, wobei sich die tankinnneraumseitige Öffnung der Tankauslassleitung an oder nahe an einer Unterseite des Mischtanks in den Tankinnenraum öffnet.

5. Imprägnieranordnung (1) nach Anspruch 4, **dadurch gekennzeichnet, dass** der Tankeinlass eine die Tankwand des Mischtanks (7) durchdringende Tankeinlassleitung (25) mit einer Außenöffnung und einer tankinnneraumseitigen Öffnung aufweist, wobei sich die tankinnneraumseitige Öffnung der Tankeinlassleitung oberhalb der tankinnneraumseitigen Öffnung der Tankauslassleitung in den Tankinnenraum öffnet, vorteilhaft in etwa auf halber Höhe des Tankinnenraums und bevorzugt mit horizontaler Richtung.

6. Imprägnieranordnung (1) nach Anspruch 4 oder 5, **dadurch gekennzeichnet, dass** der Zirkulationsanschluss eine die Tankwand des Mischtanks (7) durchdringende Zirkulationsanschlussleitung (26) mit einer Außenöffnung und einer tankinnneraumseitigen Öffnung aufweist, wobei sich die tankinnneraumseitige Öffnung der Zirkulationsanschlussleitung oberhalb der tankinnneraumseitigen Öffnung der Tankauslassleitung in den Tankinnenraum öffnet, vorteilhaft auch oberhalb der tankinnneraumseitigen Öffnung der Tankeinlassleitung und bevorzugt auf etwa zwei Drittel Höhe des Tankinnenraums.

7. Imprägnieranordnung (1) nach Anspruch 6, **dadurch gekennzeichnet, dass** die Zirkulationsanschlussleitung (26) oberhalb der tankinnneraumseitigen Öffnung der Tankeinlassleitung, bevorzugt nahe an einer Oberseite des Mischtanks (7) mit Gasaufnahmelöchern (27) perforiert ist.

8. Imprägnieranordnung (1) nach einem der Ansprüche 3 bis 7, **dadurch gekennzeichnet, dass** der Mischtank (7) einen zusätzlichen Entlüftungsauslass mit einer die Tankwand des Mischtanks (7) durchdringenden Entlüftungsauslassleitung (28) aufweist, wobei sich die tankinnneraumseitige Öffnung der Entlüftungsauslassleitung (28) an oder nahe an der Oberseite des Mischtanks (7) in den Tankinnenraum öffnet, und wobei der Tankinnenraum über die Entlüftungsauslassleitung (28) an eine Entlüftungsleitung (8) angeschlossen ist.

9. Imprägnieranordnung (1) nach einem der Ansprüche 3 bis 8, **dadurch gekennzeichnet, dass** Mischtank (7) einen stehenden Hohlkolben (22) mit unterseitigem Auslass aufweist, der mit einem Tankdeckel (23) versehen, vorzugsweise verschraubt ist, durch den die Eingangsleitung, die Zirkulationsanschlussleitung und bevorzugt die Entlüftungsleitung in den Mischtank (7) geführt sind.

10. Getränkezubereiter, geeignet zum Zubereiten eines Getränks wie z.B. eines Spirituosenmischgetränks, Schaumwein oder Kaffee, aus einem imprägniergaslosen oder -armen Getränkevorprodukt, wie beispielsweise einer mit Alkohol versetzten Fruchtpulpe oder einem mit Alkohol versetzten Fruchtsirup, und einer Anzahl Imprägniergase, wie z.B. N₂ und/oder CO2, **gekennzeichnet durch** eine Imprägnieranordnung (1) gemäß einem der vorhergehenden Ansprüche.

11. Getränkezubereiter nach Anspruch 10, **gekennzeichnet durch** zumindest einen Zapfhahn (10) oder einen elektronisch gesteuerten Getränkespender, der über die Getränkeauslassleitung mit der Imprägnieranordnung (1) verbunden ist, und durch eine Getränkepumpe (12), insbesondere eine BLDC-Getränkepumpe, um das Getränkevorprodukt aus einem vorzugsweise drucklosen Getränkevorproduktbehälter in die Getränkevorproduktzufuhrleitung und vorzugsweise auch ohne weitere Pumpen bis zum Zapfhahn (10) oder Getränkespender zu fördern.

12. Getränkezubereiter nach Anspruch 10 oder 11, **gekennzeichnet durch** einen Gasdosierer (13), welcher zum Eindosieren des Imprägniergases in das Getränkevorprodukt in einem für das Getränk gewünschten Verhältnis dient, sowie eine Erfassungseinrichtung (14) zur Erfassung des der Imprägnieranordnung (1) pro Zeiteinheit zugeführten Volumens an Getränkevorprodukt, wobei der Gasdosierer (13) einen Imprägniergaspufferspeicher (15) einen Gasdosierereingang zur Verbindung mit einem Druckgasbehälter und einen an eine in die Getränkevorproduktzuleitung führende Gasdosiererausgangsleitung angeschlossenen Gasdosiererausgang aufweist, und wobei zum Öffnen und Schließen des Gasdosierereingangs ein Eingangsventil (17) vorgesehen ist, und zum Öffnen und Schließen des Gasdosiererausgangs ein Ausgangsventil (18), und wobei ferner eine Steuerung (16) vorgesehen ist, welche entsprechend des von der Erfassungseinrichtung (10) erfassten Volumenstroms das Eingangsventil (17) und das Ausgangsventil (18) versetzt zueinander getaktet öffnet bzw. schließt.
